# EUROPEAN PATENT SPECIFICATION

(11) **EP 1 408 151 B1**
(45) Date of publication and mention of the grant of the patent: **02.11.2006**
(21) Application number: 03251696.5
(22) Date of filing: 19.03.2003
(51) Int. Cl.: D06F 58/24, D06F 58/28

(54) **Condensation clothes dryer and method for controlling operation thereof**
Kondensationwäschetrockner und Verfahren zur Steuerung des Betriebs desselben
Sèche-linge à condensation et procédé pour contrôler son opération

(30) Priority: 10.10.2002 KR 2002061837
(43) Date of publication of application: 14.04.2004
(73) Proprietor: LG ELECTRONICS INC., Seoul (KR)
(72) Inventor: Park, Young Hwan, Kwangmyong-shi, Kyonggi-do (KR); Chung, Choon Myun, Kwangmyong-shi, Kyonggi-do (KR); Choi, Mu Yong, Home Appliance Laboratory, Geumcheon-gu, Seoul (KR); Park, Dae Yun, Kwangmyong-shi, Kyonggi-do (KR); Hong, Kyung Seop, Yonsu-gu, Inchon-Kwangyokshi (KR)
(74) Representative: Hale, Peter

(56) References cited:
- EP-A- 0 543 166
- EP-A- 0 997 571
- DE-A- 1 585 945
- DE-A- 3 412 284
- DE-A- 4 216 106
- DE-C- 4 330 456
- GB-A- 2 094 961
- US-A- 6 032 494

## Description

The present invention relates to a clothes dryer, and more particularly, to a clothes dryer in which hot air is used and moisture generated during the drying process is condensed into waterdrops and discharged.

Generally, a clothes dryer is an apparatus for drying an object after washing. There are two different types of clothes dryers: a discharge type clothes dryer in which external air is introduced to perform a drying process and a condensation type clothes dryer in which internal air is recirculated for the drying process and moisture is condensed into waterdrops to be discharged.

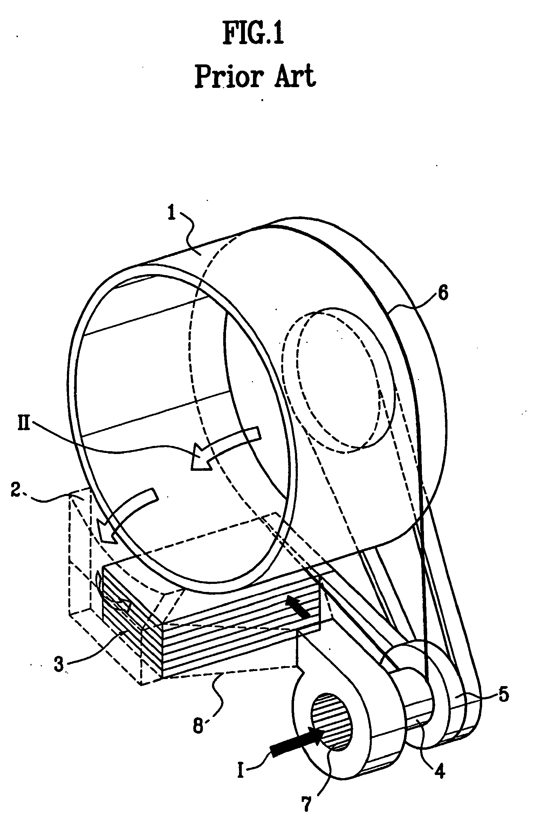

FIG. 1 is a perspective view illustrating main parts of a condensation type clothes dryer. The arrow 'I' indicates an inlet passage for external air and the arrow 'II' indicates a flow of air circulating inside the clothes dryer.

As shown in FIG 1, a condensation type clothes dryer includes a drum 1, a filter 2, a condenser 3, a circulation fan 5, a cooling fan 7, a heater (not shown), and a circulation duct (not shown). The drum 1 is formed in a cylindrical shape and has a plurality of lifters or agitators (not shown) on its inner circumferential face. The drum 1 is rotated by a driving motor 4. For this, the drum 1 and driving motor 4 are connected to each other by a belt 6.

The filter 2 filters off such substances as lint particles from humid air discharged from the inside of the drum 1. The humid air which passes through the filter 2 is condensed into waterdrops by the condenser 3, to eliminate moisture from the humid air. The cooling fan 7 discharges the external air through a duct 8 connected to the condenser 3, thereby cooling the condenser 3.

The circulation fan 5 directs dry air into the drum 1 again. The heater heats the dry air before it flows into the drum 1. Although not shown, in the condensation type clothes dryer the humid air, resulting from the drying process in the drum 1, is guided to pass through the filter 2, the condenser 3, the circulation fan 5, and the heater, and finally, the air flows back into the drum 1 again as dry air.

Generally, in the condensation type clothes dryer of the known art, the driving motor 4 is connected to drive not only to the drum 1 but also to the cooling fan 7 and circulation fan 5.

When the drying process is started, the drum 1, the cooling fan 7, and the circulation fan 5 are rotated simultaneously. Air inside the drum 1 is circulated by the action of the circulation fan 5. At this point, the air initially circulated is not condensed by the condenser 3 because of its low temperature and low humidity.

The clothes dryer of the related art results in a heat loss during the initial operation as air heated by the heater is cooled down by the cooling fan 7 again. In addition, as the cooling fan 7 is operated during initial operation of the clothes dryer during which the condensation does not occur, the driving motor 4 is excessively loaded.

DE-A-4216106 discloses a clothes dryer having a heat pump for drying the air circulating in the dryer as well as a heat exchanger. The heat exchanger may include a cooling fan which may be switched off during an initial heating phase or until the dryer has reached its operating temperature.

DE-A-4330456 and EP-A-0997571 discloses a temperature sensor and a lint filter downstream of the drum.

DE-A-1585945 discloses a clothes dryer having an electric heater element for evaporating water from the clothes and a water cooled condenser for condensing the resulting vapour. At the beginning of the drying process, the heater element is switched on only when the temperature inside the dryer has risen sufficiently to evaporate the water from the clothes.

EP-A-0543166 address the problem of reducing the level of operating noise in a clothes dryer. This is achieved by reducing the heating power of the dryer together with the revolutions per minute of the circulation and cooling fans. Due to the reduced revolutions per minute of the fans, the noise level is reduced. DE-A-3412284 discloses a method of operating a condensation clothes dryer of the type described above in which the cooling fan is switched on during the initial heating period so that the dryers operating temperature is reached more quickly.

Accordingly, the present invention is directed to a clothes dryer and a method for controlling its operation that substantially obviate one or more problems due to limitations and disadvantages of the known art.

An object of the present invention is to provide a clothes dryer and a method for controlling its operation that prevent heat and energy losses caused by the operation of a cooling fan during the initial operation process of the clothes dryer.

Another object of the present invention is to provide a clothes dryer and a method for controlling its operation that improve the drying efficiency of the clothes dryer by varying the amount of airflow cooling a condenser according to amount of heating of a heater.

The invention is set out in independent claims 1 and 6. Additional, optional features are set out in the dependent claims.

A clothes dryer includes a drum, a circulation duct, a condenser, a heater, a circulation fan, a first motor, a cooling fan, a second motor, and a controller. The drum is rotatably provided in a cabinet. The circulation duct connects an air inlet and outlet of the drum and forms an air circulation passage. The condenser is provided in the circulation duct to condense air being discharged from the drum. The heater is provided in the circulation duct to heat the air being circulated. The circulation fan is provided in the circulation duct to circulate air. The first motor rotates the drum and the circulation fan. The cooling fan provided on one side of the condenser cools the condenser. The second motor drives the cooling fan. The controller generates independent control signals to the first and second motors, respectively, so as to control operation of the circulation fan and the cooling fan independently.

The second motor is a variable speed motor. The heater may be controlled to adjust its amount of heating. The heater can be provided in a circulation duct adjacent to the inlet of the drum to heat the circulating air which passes through the condenser.

A lint filter for filtering off lint in the circulation duct and a temperature sensor for measuring the temperature of air in the circulation duct or drum can be provided.

A method for controlling an operation of a clothes dryer, including a circulation fan for circulating air and a cooling fan being separately driven to cool down a condenser, includes processes of (1) simultaneously rotating the circulation fan and a drum and operating a heater in a state of the cooling fan being stopped and (2) beginning to rotate the cooling fan when a predetermined condition is met so as to delay operation of the condenser for improving dry efficiency.

The cooling fan can be rotated according to either a predetermined period X of time elapsing, or the temperature of circulating air reaching a predetermined level.

Also, the amount of heating of the heater can be varied. When the amount of heating of the heater is at or below a first value (Q1), the cooling fan can be operated at a low speed. When the amount of heating of the heater is at or above a second value (Q2), the cooling fan can be operated at a high speed. When the amount of heating is between the first and second values (Q1 and Q2), the cooling fan can be operated at an intermediate speed.

A further method for controlling an operation of a clothes dryer of the present invention, includes a circulation fan for circulating air and a cooling fan being separately operated to cool down a condenser, includes processes of (1) simultaneously rotating the circulation fan for circulating air and a drum, and operating a heater for heating the air, and (2) beginning to operate the cooling fan at a regular speed when a predetermined condition is met so as to delay operation of condenser for improving dry efficiency.

A further method for controlling the operation of a clothes dryer of the present invention, includes a circulation fan for circulating air and a cooling fan being separately operated to cool down a condenser, includes a processes of (1) operating a cooling fan at a low speed when an amount of heating of a heater is a first set value (Q1) and less; (2) operating the cooling fan at a high speed when the amount of heating of the heater is the second set value (Q2) and more. At this time, the cooling fan is operated at a regular speed when the amount of heating of the heater is between the first and second set values (Q1 and Q2).

The accompanying drawings, which are included to provide a further understanding of the invention and are incorporated in and constitute a part of this specification, illustrate embodiments of the invention and together with the description serve to explain the principles of the invention.
In the drawings:
FIG 1 is a perspective view illustrating a related art clothes dryer of a condensation type;
FIG 2 is a longitudinal sectional view illustrating main parts of a condensation type clothes dryer in accordance with an embodiment of the present invention;
FIG 3 is a cross sectional view illustrating the condensation type clothes dryer of FIG 2;
FIG 4 is a flow chart for illustrating a method for controlling an operation of a clothes dryer in accordance with the first embodiment of the present invention; and
FIG. 5 is a flow chart for illustrating a method for controlling an operation of a clothes dryer in accordance with the second embodiment of the present invention.

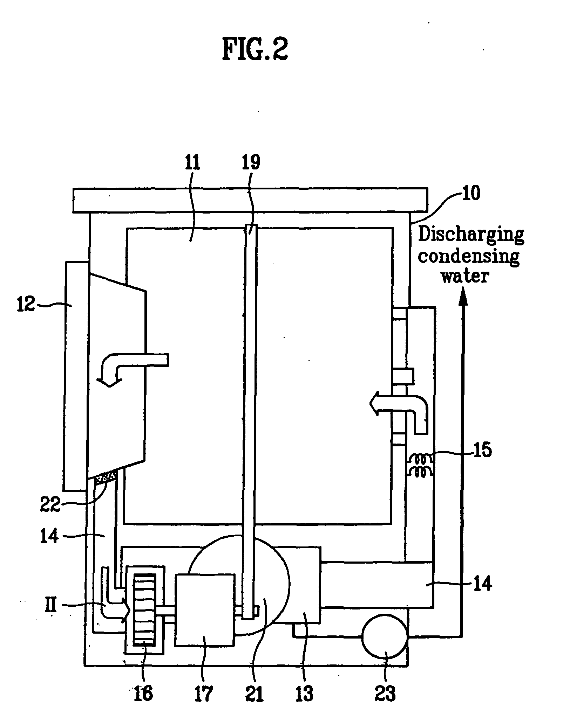

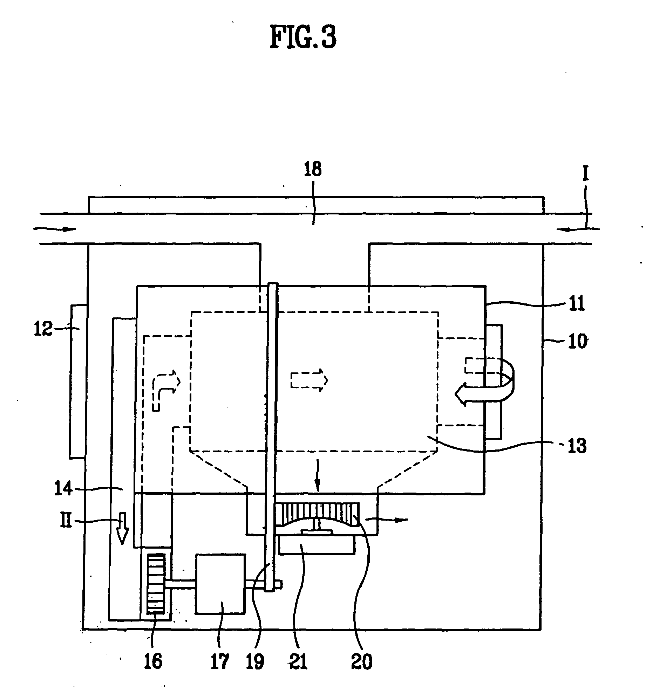

FIGS. 2 and 3 illustrate the structure of a clothes dryer in accordance with the present invention. The arrow 'I' shows an external air flow and the arrow 'II' shows a circulating air flow.

A door 12 is provided on the front face of a cabinet 10. A rotatable drum 11 is mounted in the cabinet 10. The drum 11 and a first motor 17 are disposed in a lower portion of the cabinet 10 connected to each other by a drive belt 19. The drum 11 has an air inlet and air outlet.

A condenser 13 is provided in the lower portion of the cabinet 10 which dries air made humid during a dry process. A circulation duct 14 for circulating air in the drum 11 connects the inlet and outlet of the drum 11 so as to make an air circulating passage. The condenser 13 is provided in the middle portion of the circulation duct 14. Accordingly, the air in the drum 11 flows through the circulation duct 14 and is introduced into the drum 11 again after passing through the condenser 13.

A controllable heater 15 is arranged in the circulation duct 14 after the condenser to create dry heated circulating air. As shown in FIG 2, the heater 15 is adjacent the inlet of the drum 11.

A circulation fan 16 in the circulating duct circulates air inside the drum 11. The circulation fan 16, as shown in FIG 2, is rotated by the first motor 17. In the present invention, the drum 11 is also rotated by the first motor 17. For this, a shaft of the first motor 17 extends from either end of the first motor 17. The shafts are respectively connected to the drive belt 19 and the circulation fan 16. In an alternative form two motors can be used to drive the drum 11 and circulation fan 16, separately.

The condenser 13 is provided with cold air from the exterior of the cabinet 10 for heat exchange with the humid air circulating through the circulation duct 14 so that moisture is condensed out of the latter. An external air supply duct 18 is connected to one side of the condenser 13 and a cooling fan 20 is connected to the other side of the condenser 13. The cooling fan 20 sucks external air from the external air supply duct 18 and sends it to the condenser 13. The cooling fan 20 is driven by a second motor 21.

The second motor 21 is a variable speed motor such as a brushless direct current (BLDC) motor. The second motor 21 being separate from the first motor 17 rotates the cooling fan 20 only. A controller (not shown) generates independent control signals to the first and second motors (17 and 21), respectively, so as to control operation of the circulation fan 16 and cooling fan 20 independently.

In the present invention, a lint filter 22 may additionally be provided. As shown in FIG 2, the lint filter 22 is provided inside the circulation duct 14 and filters off alien substances such as lint particles from the circulating air.

Also, a temperature sensor (not shown) can be provided in the drum 11 to measure the temperature of air inside the drum 11. Also, a temperature sensor may be provided in the circulation duct 14 to measure the temperature of the circulating air.

A gutter (not shown) and a pump 23 are arranged below the condenser 13. The gutter collects water condensed during the condensation process. The pump 23 either discharges the water collected in the gutter to the exterior or guides the waterdrops to a condensing water tank (not shown) also mounted in the cabinet 10.

A method for controlling an operation of a clothes dryer having the above-described structure will be described below.

First, a user puts an object to be dried into a drum 11 and operates the clothes dryer. As the clothes dryer starts operating, the first motor 17 and the heater 15 are started. However, the second motor 21 is not operated during an initial operation process of the clothes dryer.

As the drum 11 and a circulation fan 16 are rotated, air inside the drum 11 is circulated through a circulation duct 14. The circulating air heated by the heater is introduced into the drum 11 after it passes through a condenser 13. At this time, as the cooling fan 20 is not rotated, cold external air is not sent to the condenser 13. Accordingly, in the present invention, heat loss is limited because a heat exchange process does not take place during the initial operation process. Therefore, in the present invention, operation of condenser 13 is delayed and the drying efficiency is improved.

The second motor 21 is then started and the cooling fan 20 is rotated either when a predetermined period X has elapsed, or when the temperature of circulating air reaches a predetermined level.

The predetermined period X is the estimated time required for the air circulating in the drum 11 to reach a predetermined temperature T and is set in the controller in advance.

The temperature of the circulating air reaching the predetermined temperature T is measured by the temperature sensor being provided in the drum 11 or circulating duct 14. When the temperature reaches the predetermined degree T, the second motor 21 is operated.

When the cooling fan 20 is rotated, external air of the cabinet 10 is introduced through the external air supply duct 18 and then sent to the condenser 13 by the cooling fan 20 for a heat exchange process with the circulating air inside the condenser 13. Air of high humidity after a drying process in the drum 11 passes through the condenser 13 and exchanges heat to be dried by condensation of the moisture. The dried air from which moisture is eliminated is heated by the heater 15 and introduced into the drum 11 again. The external air after the heat exchange process is discharged to the exterior of the cabinet 10 through a discharge hole (not shown) formed on one side of the cabinet 10.

As amount of heating of the heater 15 is variable, the speed of the second motor 21 is controlled according the amount of heating of the heater 15. In this way, the drying process can be performed for the most suitable conditions.

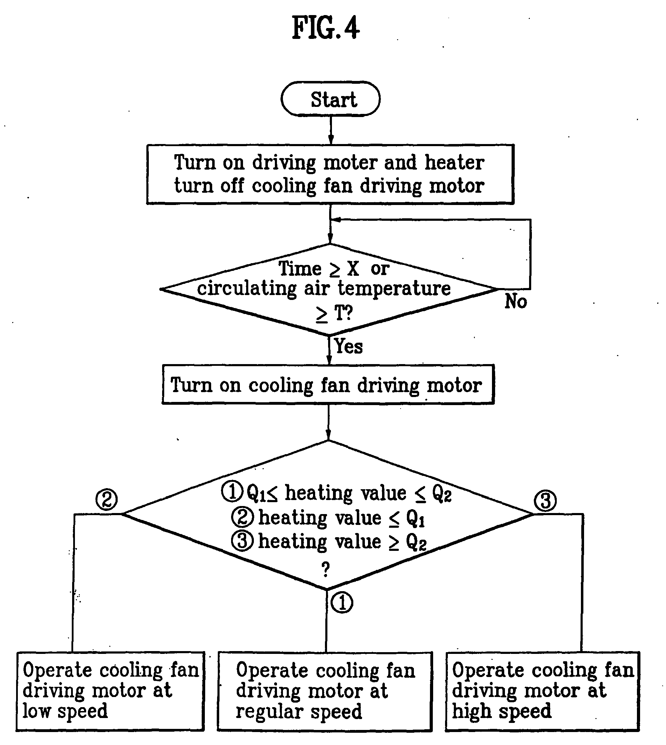

As shown in FIG. 4, if the heater 15 is operated when the amount of heating is at the second set value Q2 or more, the second motor 21 is operated at a high speed. Accordingly, the amount of air flowing to the condenser 13 increases and in this way, a rapid drying process can be performed because condensing efficiency is improved. However, unpleasant noise during the operation is reduced as the second motor 21 is operated at a low speed when the amount of heating of the heater 15 is at the first set value Q1 or below.

Also, the present invention can be realized by operating the heater 15 with its heating between the first and second set values Q1 and Q2. In this case, the second motor 21 is operated at an intermediate speed.

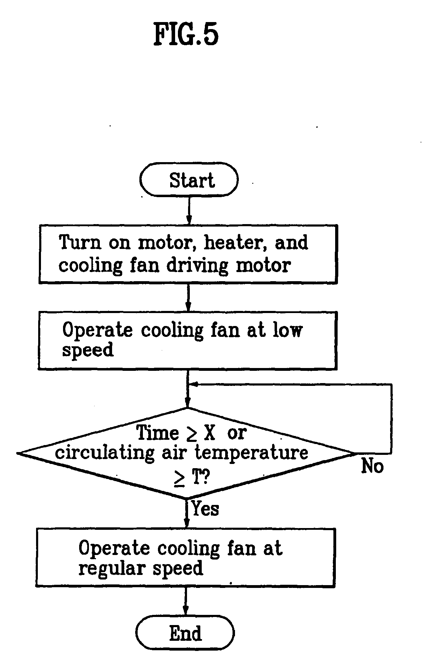

FIG 5 is a flow chart illustrating a method for controlling operation of a clothes dryer in accordance with a second embodiment of the present invention. In FIG 4, a cooling fan 20 starts rotating when a predetermined condition is met after a clothes dryer has started to operate. In the second embodiment, however, the cooling fan 20 is rotated at a low speed from start up of the operation of the clothes dryer. Then, the cooling fan 20 is rotated at a regular speed when one of the predetermined conditions is met.

The second embodiment of the present invention will be briefly described with reference to FIG 5.

First, a user puts an object to be dried into the drum 11 and operates the clothes dryer. As the clothes dryer is operated, a first motor 17, a heater 15, and a second motor 21 are started. At this time, the second motor 21 and cooling fan 20 are operated at a low speed. As the cooling fan 20 is operated at a low speed, a little amount of external cold air is sent to the condenser 13. Accordingly, heat loss, which is caused by heat exchange in the condenser during the early operation process, is reduced.

Then, when a predetermined condition is met during the operating of the clothes dryer, the cooling fan 20 is rotated at a regular speed. In other words, as shown in FIG 5, if a predetermined period X elapses or when the temperature of circulating air reaches a predetermined level T, the cooling fan 20 starts rotating at an operational speed.

Of course, similar to the first embodiment shown in FIG 4, after the cooling fan 20 is rotated at a regular speed, the driving speed of the second motor 21 is varied according to amount of heating required of the heater.

As have been described, a clothes dryer and a method for controlling its operation process have the following advantages.

First, as a cooling fan for sucking external air is separately operated from a drum or a circulation fan, a second motor can be operated at a low speed or does not have to be operated at all until circulating air has a high humidity. In this way, in the present invention, heat and energy losses are prevented, which used to occur during the initial drying process of known clothes dryers. Accordingly, the circulating air quickly and easily reaches the preset temperature and thus, drying efficiency increases and energy is saved.

Second, as the driving speed of a second motor is variable, various operation control algorithms according to different heating values of the heater are possible.

Third, unpleasant noise during the operation is reduced as the second motor is operated at a low speed when the amount of heating of the heater is low.

It will be apparent to those skilled in the art that various modifications and variations can be made in the clothes dryer and the method for controlling operation of the clothes dryer of the present invention without departing from the scope of the invention. Thus, it is intended that the present invention cover the modifications and variations of this invention provided they come within the scope of the appended claims.

## Claims

1. A clothes dryer including a rotatable drum (11) in a cabinet (10), a circulation duct (14) connecting an inlet and outlet of the drum to form an air circulation path, a condenser (13) provided in the path, a heater (15) provided in the path to heat the circulating air, a circulation fan (16) for circulating the air, a first motor (17) adapted to drive the circulation fan, a cooling fan (30) for cooling the condenser, a second (21) motor adapted to drive the cooling fan, and a controller adapted to generate control signals for the first and second motors, respectively, so as to control operation of the circulation fan and the cooling fan independently; **characterized in that** the second motor (21) is a variable speed motor, an output of the heater is variable and the controller is adapted to control the speed of the second motor in dependence upon the output of the heater.

2. The clothes dryer of claim 1 wherein the heater (15) is provided in the path adjacent the inlet to the drum (11) to heat the circulating air from the condenser (13).

3. The clothes dryer of any of claims 1 or 2, further comprising a lint filter (22) for filtering off lint in the path.

4. The clothes dryer of any of claims 1 to 3, further comprising a temperature sensor for measuring temperature of air circulating in the circulation duct.

5. The clothes dryer of any of claims 1 to 3, further comprising a temperature sensor for measuring temperature of an air inside the drum.

6. A method of controlling a clothes dryer, which includes a circulation fan (16) arranged to circulate air and a separately driven cooling fan (20) arranged to cool a condenser (13) for cooling the circulating air and a heater (15) for heating the circulating air, including independently controlling the circulation (16) and cooling (20) fans and **characterized in that** the speed of the cooling fan is variable and by controlling the speed of the cooling fan (20) in dependence upon an output of the heater.

7. The method of claim 6 comprising the steps of:
simultaneously rotating the circulation fan (16) and a drum (11), and operating the heater (15) while the cooling fan (20) is stopped; and
beginning to rotate the cooling fan (20) when a predetermined condition is met so as to delay operation of the condenser for improving drying efficiency.

8. The method of claim 7, wherein the cooling fan (20) is rotated after a predetermined period from starting the dryer has elapsed.

9. The method of claim 7, wherein the cooling fan (20) is rotated when the temperature of circulating air reaches a predetermined level.

10. The method of claim 6 comprising steps of:
simultaneously driving the cooling fan (20) at a first, lower speed and driving the circulation fan (16) for circulating air and a drum (11), and operating the heater (15); and
beginning to operate the cooling fan (20) at a second, higher, speed when a predetermined condition is met so as to delay full operation of the condenser, thereby improving drying efficiency.

11. The method of claim 10, wherein the cooling fan is driven at the second speed when a predetermined period has elapsed.

12. The method of claim 10, wherein the cooling fan is driven at the second speed when the temperature of circulating air reaches a predetermined level.

13. The method of any one of claims 6 to 12 comprising the steps of:
operating the cooling fan at a first speed when an output of the heater is at a first value (Q1) or less; and
operating the cooling fan at a higher speed when the output of the heater is at a second, higher value (Q2) or more.

14. The method of claim 13, wherein the cooling fan is operated at an intermediate speed when the output of the heater is between the first and second values (Q1 and Q2).

## Patentansprüche

1. Wäschetrockner, der eine rotierbare Trommel (11) in einem Gehäuse (10), einen Zirkulationskanal (14), der einen Einlass und einen Auslass der Trommel verbindet, um einen Luftzirkulationsweg zu bilden, einen Kondensator (13), der in dem Weg vorgesehen ist, eine Heizeinheit (15), die in dem Weg vorgesehen ist, um die zirkulierende Luft zu erwärmen, ein Zirkulationsgebläse (16), um die Luft zu zirkulieren, einen ersten Motor (17), der geeignet ist, das Zirkulationsgebläse anzutreiben, ein Kühlgebläse (30), um den Kondensator zu kühlen, einen zweiten (21) Motor, der geeignet ist, das Kühlgebläse anzutreiben, und eine Steuereinheit, die geeignet ist, Steuerungs-Signale für den ersten bzw. zweiten Motor zu erzeugen, um den Betrieb des Zirkulationsgebläses und des Kühlgebläses unabhängig zu steuern, aufweist; **dadurch gekennzeichnet, dass** der zweite Motor (21) ein Motor mit veränderlicher Geschwindigkeit ist, dass eine Ausgangsleistung der Heizeinheit veränderlich ist, und dass die Steuereinheit geeignet ist, die Geschwindigkeit des zweiten Motors in Abhängigkeit von der Ausgangsleistung der Heizeinheit zu steuern.

2. Wäschetrockner nach Anspruch 1 , wobei die Heizeinheit (15) in dem Weg neben dem Einlass in die Trommel (11) vorgesehen ist, um die von dem Kondensator (13) kommende, zirkulierende Luft zu erwärmen.

3. Wäschetrockner nach einem der Ansprüche 1 oder 2, welcher weiters ein Fusselfilter (22) aufweist, um Fusseln in dem Weg herauszufiltern.

4. Wäschetrockner nach einem der Ansprüche 1 bis 3, welcher weiters einen Temperatursensor aufweist, um die Temperatur der in dem Zirkulationskanal zirkulierenden Luft zu messen.

5. Wäschetrockner nach einem der Ansprüche 1 bis 3, welcher weiters einen Temperatursensor aufweist, um die Lufttemperatur innerhalb der Trommel zu messen.

6. Verfahren zum Steuern eines Wäschetrockners, der ein Zirkulationsgebläse (16), das angeordnet ist, um Luft zu zirkulieren und ein getrennt angetriebenes Kühlgebläse (20), das angeordnet ist, um einen Kondensator (13) zu kühlen, um die zirkulierende Luft zu kühlen, und eine Heizeinheit (15) zum Erwärmen der zirkulierenden Luft enthält, wobei das Verfahren das unabhängige Steuern des Zirkulations- (16) und Kühlgebläses (20) enthält und **dadurch gekennzeichnet ist, dass** die Geschwindigkeit des Kühlgebläses veränderlich ist, und dass die Geschwindigkeit des Kühlgebläses (20) in Abhängigkeit von einer Ausgangsleistung der Heizeinheit gesteuert wird.

7. Verfahren nach Anspruch 6, welches folgende Schritte aufweist:
simultanes Rotieren des Zirkulationsgebläses (16) und einer Trommel (11), und Betreiben der Heizeinheit (15), während das Kühlgebläse (20) angehalten ist; und
Beginnen, das Kühlgebläse (20) zu rotieren, wenn eine vorbestimmte Bedingung erfüllt ist, so dass der Betrieb des Kondensators verzögert wird, um die Effizienz des Trocknens zu verbessern.

8. Verfahren nach Anspruch 7, wobei das Kühlgebläse (20) rotiert wird, nachdem eine vorbestimmte Zeitdauer vom Starten des Trockners verstrichen ist.

9. Verfahren nach Anspruch 7, wobei das Kühlgebläse (20) rotiert wird, wenn die Temperatur der zirkulierenden Luft ein vorbestimmtes Niveau erreicht.

10. Verfahren nach Anspruch 6, welches folgende Schritte aufweist:
simultanes Antreiben des Kühlgebläses (20) mit einer ersten, geringeren Geschwindigkeit und Antreiben des Zirkulationsgebläses (16) für das Zirkulieren von Luft und eine Trommel (11) und betreiben der Heizeinheit (15); und
Beginnen, das Kühlgebläse (20) mit einer zweiten, höheren Geschwindigkeit zu betreiben, wenn eine vorbestimmter Bedingung erfüllt ist, so dass der volle Betrieb des Kondensators verzögert wird, um die Effizienz des Trocknens zu verbessern

11. Verfahren nach Anspruch 10, wobei das Kühlgebläse mit der zweiten Geschwindigkeit angetrieben wird, wenn eine vorbestimmte Zeitdauer verstrichen ist.

12. Verfahren nach Anspruch 10, wobei das Kühlgebläse mit der zweiten Geschwindigkeit angetrieben wird, wenn die Temperatur der zirkulierenden Luft ein vorbestimmtes Niveau erreicht.

13. Verfahren nach einem der Ansprüche 6 bis 12, welches folgende Schritte aufweist:
Betreiben des Kühlgebläses mit einer ersten Geschwindigkeit, wenn eine Ausgangsleistung der Heizeinheit auf einem Wert (Q1) oder darunter liegt; und
Betreiben des Kühlgebläses mit einer höheren Geschwindigkeit, wenn die Ausgangsleistung der Heizeinheit auf einem zweiten, höheren Wert (Q2) oder darüber liegt.

14. Verfahren nach Anspruch 13, wobei das Kühlgebläse mit einer dazwischen liegenden Geschwindigkeit betrieben wird, wenn die Ausgangsleistung der Heizeinheit zwischen dem ersten und dem zweiten Wert (Q1 und Q2) liegt.

## Revendications

1. Sèche-linge comprenant un tambour rotatif (11) dans une armoire (10), une conduite de circulation (14) raccordant une entrée et une sortie du tambour pour former un chemin de circulation d'air, un condenseur (13) prévu sur le chemin, un réchauffeur (15) prévu sur le chemin pour chauffer l'air en circulation, un ventilateur de circulation (16) pour faire circuler l'air, un premier moteur (17) adapté pour entraîner le ventilateur de circulation, un ventilateur de refroidissement (30) pour refroidir le condenseur, un second moteur (21) adapté pour entraîner le ventilateur de refroidissement, et une commande adaptée pour générer des signaux de commande respectivement pour les premier et second moteurs afin de commander indépendamment le fonctionnement du ventilateur de circulation et du ventilateur de refroidissement, **caractérisé en ce que** le second moteur (21) est un moteur à vitesse variable, qu'une sortie du réchauffeur est variable et que la commande est adaptée pour commander la vitesse du second moteur en fonction de la sortie du réchauffeur.

2. Sèche-linge selon la revendication 1, dans lequel le réchauffeur (15) est prévu sur le chemin adjacent à l'entrée du tambour (11) pour chauffer l'air en circulation provenant du condenseur (13).

3. Sèche-linge selon l'une quelconque des revendications 1 ou 2, comprenant en outre un filtre à peluches (22) pour filtrer les peluches sur le chemin.

4. Sèche-linge selon l'une quelconque des revendications 1 à 3, comprenant en outre un capteur de température pour mesurer la température de l'air en circulation dans la conduite de circulation.

5. Sèche-linge selon l'une quelconque des revendications 1 à 3, comprenant en outre un capteur de température pour mesurer la température de l'air à l'intérieur du tambour.

6. Procédé pour commander un sèche-linge qui comprend un ventilateur de circulation (16) agencé pour faire circuler de l'air et un ventilateur de refroidissement (20) entraîné séparément agencé pour refroidir un condenseur (13) pour refroidir l'air en circulation, et un réchauffeur (15) pour chauffer l'air en circulation, comprenant la commande indépendante des ventilateurs de circulation (16) et de refroidissement (20) et **caractérisé en ce que** la vitesse du ventilateur de refroidissement est variable et par la commande de la vitesse du ventilateur de refroidissement (20) en fonction d'une sortie du réchauffeur.

7. Procédé selon la revendication 6, comprenant les étapes suivantes :
faire tourner simultanément le ventilateur de circulation (16) et un tambour (11), et faire fonctionner le réchauffeur (15) pendant que le ventilateur de refroidissement (20) est arrêté, et
commencer à faire tourner le ventilateur de refroidissement (20) lorsqu'une condition prédéterminée est vérifiée de sorte à retarder le fonctionnement du condenseur pour améliorer l'efficacité du séchage.

8. Procédé selon la revendication 7, dans lequel le ventilateur de refroidissement (20) est mis en rotation après qu'un laps de temps prédéterminé s'est écoulé depuis le démarrage du séchoir.

9. Procédé selon la revendication 7, dans lequel le ventilateur de refroidissement (20) est mis en rotation lorsque la température de l'air en circulation atteint un niveau prédéterminé.

10. Procédé selon la revendication 6, comprenant les étapes suivantes :
entraîner simultanément le ventilateur de refroidissement (20) à une première vitesse basse et entraîner le ventilateur de circulation (16) pour faire circuler l'air et un tambour (11) et faire fonctionner le réchauffeur (15), et
commencer à faire fonctionner le ventilateur de refroidissement (20) à une seconde vitesse plus élevée lorsqu'une condition prédéterminée est vérifiée afin de retarder le fonctionnement à plein régime du condenseur, et améliorer ainsi l'efficacité du séchage.

11. Procédé selon la revendication 10, dans lequel le ventilateur de refroidissement est entraîné à la seconde vitesse lorsqu'un laps de temps prédéterminé s'est écoulé.

12. Procédé selon la revendication 10, dans lequel le ventilateur de refroidissement est entraîné à la seconde vitesse lorsque la température de l'air en circulation atteint un niveau prédéterminé.

13. Procédé selon l'une quelconque des revendications 6 à 12, comprenant les étapes suivantes :
faire fonctionner le ventilateur de refroidissement à une première vitesse lorsqu'une sortie du réchauffeur est à une première valeur (Q1) ou au-dessous, et
faire fonctionner le ventilateur de refroidissement à une vitesse plus élevée lorsque la sortie du réchauffeur est à une seconde valeur plus élevée (Q2) ou au-dessus.

14. Procédé selon la revendication 13, dans lequel le ventilateur de refroidissement fonctionne à une vitesse intermédiaire lorsque la sortie du réchauffeur est entre les première et seconde valeurs (Q1 et Q2).
